# EUROPEAN PATENT APPLICATION

(11) **EP 4 675 323 A1**
(43) Date of publication of application: **07.01.2026**
(21) Application number: 24764045.1
(22) Date of filing: 01.03.2024
(51) Int. Cl.: G02B 6/255

(54) **FUSION SPLICER**

(30) Priority: 01.03.2023 JP 2023031377
(71) Applicant: Sumitomo Electric Industries, Ltd., Osaka-shi, Osaka 541-0041 (JP)
(72) Inventor: KIMURA Akinori, Osaka-shi, Osaka 541-0041 (JP); MOURI Shintaro, Osaka-shi, Osaka 541-0041 (JP); ENDO Soichi, Osaka-shi, Osaka 541-0041 (JP)
(74) Representative: Müller-Boré & Partner Patentanwälte PartG mbB
(86) International application number: PCT/JP2024/007826
(87) International publication number: WO 2024/181568

(57) **Abstract**

A fusion splicer according to one embodiment includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder, and that presses the optical fiber held by the optical fiber holder; a light source that irradiates the clamp portion with light; and an electric power supply portion that supplies electric power to the light source. A tip of the optical fiber protrudes from the clamp portion. The clamp portion includes a transparent portion that is transparent to the light, and that transmits the light to the optical fiber.

## Description

### Technical Field

The present disclosure relates to a fusion splicer.

Priority is claimed on Japanese Patent Application No. 2023-031377, filed on March 1, 2023, the entire content of which is incorporated herein by reference.

### Background Art

Patent Literature 1 describes a fusion splicing device. The fusion splicing device includes a pair of V-groove bases on which a pair of respective optical fibers are placed; LED lamps disposed on respective sides of the pair of optical fibers; and a first television camera and a second television camera that capture images of the pair of optical fibers. The LED lamps cause light to be incident on the optical fibers from the sides of the optical fibers. The light incident on the optical fibers from the sides is emitted from end faces of the optical fibers. The first television camera and the second television camera captures images of the end faces of the optical fibers that emit the light.

Patent Literature 2 describes a splicing device for optical fibers. The splicing device splices a pair of photonic crystal fibers (PCFs). The splicing device includes two holding members that hold two respective PCFs; a first drive unit that moves each holding member; a mirror located between the two PCFs; and a camera that captures an image reflected in the mirror. In the splicing device, the PCFs are irradiated with light by epi-illumination from the camera side. The cores of the end faces of the PCFs are observed in a state where the entire end faces are illuminated by the light irradiation.

### Citation List

### Patent Literature

Patent Literature 1: PCT International Publication No. WO 2013/077002
Patent Literature 2: Japanese Unexamined Patent Publication No. 2004-53625

### Summary of Invention

### Technical Problem

A fusion splicer according to the present disclosure includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder, and that presses the optical fiber held by the optical fiber holder; a light source that irradiates the clamp portion with light; and an electric power supply portion that supplies electric power to the light source. A tip of the optical fiber protrudes from the clamp portion. The clamp portion includes a transparent portion that is transparent to the light, and that transmits the light to the optical fiber.

### Brief Description of Drawings

[FIG. 1] FIG. 1 is a view schematically showing a fusion splicer according to an embodiment.
[FIG. 2] FIG. 2 is a side view schematically showing an optical fiber holder, a rotation mechanism, and a clamp of the fusion splicer according to the embodiment.
[FIG. 3] FIG. 3 is a perspective view schematically showing the optical fiber holder, the rotation mechanism, and the clamp portion of the fusion splicer according to the embodiment.
[FIG. 4] FIG. 4 is a side view of the clamp portion and a light source in FIG. 3.
[FIG. 5] FIG. 5 is a plan view showing the clamp portion and the light source in FIG. 4.
[FIG. 6] FIG. 6 is a side view showing a clamp portion and a non-transparent material of a fusion splicer according to a first modification example.
[FIG. 7] FIG. 7 is a front view showing the clamp portion and the non-transparent material of the fusion splicer according to the first modification example.
[FIG. 8] FIG. 8 is a side view schematically showing an optical fiber holder, a rotation mechanism, and a clamp portion of a fusion splicer according to a second modification example.
[FIG. 9] FIG. 9 is a perspective view schematically showing the optical fiber holder, the rotation mechanism, and the clamp portion of the fusion splicer according to the second modification example.
[FIG. 10] FIG. 10 is a side view schematically showing an optical fiber holder, a rotation mechanism, and a clamp portion of a fusion splicer according to a third modification example.
[FIG. 11] FIG. 11 is a perspective view schematically showing the optical fiber holder, the rotation mechanism, and the clamp portion of the fusion splicer according to the third modification example.
[FIG. 12] FIG. 12 is a side view of a fusion splicer according to a fourth modification example.
[FIG. 13] FIG. 13 is a plan view of the fusion splicer according to the fourth modification example.

### Description of Embodiments

In a method in which a light source such as epi-illumination irradiates an optical fiber with light to illuminate an end face of the optical fiber, it may be difficult to accurately identify the position of a core of the optical fiber. A method in which light is incident on an optical fiber from an end face on the side opposite an end face of the optical fiber to be illuminated is known. However, in this method, particularly when the optical fiber is long, the light may not reach the end face to be illuminated. Therefore, it may not be possible to sufficiently illuminate the end face of the optical fiber.

An object of the present disclosure is to provide a fusion splicer capable of sufficiently illuminating an end face of an optical fiber.

### [Description of embodiment of present disclosure]

First, the contents of an embodiment of the present disclosure will be listed. (1) A fusion splicer according to one embodiment includes an optical fiber holder that holds an optical fiber; a rotation mechanism that rotates the optical fiber holder about a central axis extending along the optical fiber; a clamp portion that is disposed on a side opposite the rotation mechanism with respect to the optical fiber holder in a direction along the central axis, and that presses the optical fiber held by the optical fiber holder; a light source that irradiates the clamp portion with light; and an electric power supply portion that supplies electric power to the light source. A tip of the optical fiber protrudes from the clamp portion. The clamp portion includes a transparent portion that is transparent to the light, and that transmits the light to the optical fiber.

In the fusion splicer, the optical fiber holder holds the optical fiber, and the rotation mechanism rotates the optical fiber holder. The fusion splicer includes the clamp portion that presses the optical fiber, and the clamp portion is disposed on the side opposite the rotation mechanism with respect to the optical fiber holder. The fusion splicer includes the light source that irradiates the clamp portion with the light. The tip of the optical fiber protrudes from the clamp portion. The clamp portion includes the transparent portion that is transparent to the light from the light source, and that transmits the light to the optical fiber. The light that has transmitted through the transparent portion of the clamp portion is incident on the optical fiber, and propagates to the tip of the optical fiber. Therefore, an end face of the optical fiber located at the tip of the optical fiber can be sufficiently illuminated. "Being sufficiently illuminated" means being illuminated to a level that allows a camera to perform image capturing.

(2) In (1) above, the clamp portion may include a non-transparent portion at least in a part other than a surface through which the light from the light source enters and a surface facing the optical fiber. In this case, the light can be prevented from leaking from the non-transparent portion provided at least in a part other than the surface through which the light from the light source enters and the surface facing the optical fiber. Therefore, stray light generated in the transparent portion can be prevented from exiting the clamp portion.

(3) In (2) above, the non-transparent portion may be a reflective material that reflects the light. In this case, since the light reflected by the reflective material can be incident on the optical fiber, the end face of the optical fiber can be made brighter.

(4) In any one of (1) to (3) above, the clamp portion may include an optical path change portion that changes an optical path of the light inside the clamp portion. In this case, by changing the optical path of the light inside the clamp portion using the optical path change portion, a larger amount of the light can be guided to a portion of the optical fiber held by the clamp portion. Therefore, the end face of the optical fiber can be made brighter.

(5) In any one of (1) to (4) above, at least a part of a surface of the clamp portion facing the optical fiber may be a highly reflective surface. In this case, the light that has reached the optical fiber from the light source via the clamp portion is reflected by the highly reflective surface, and is incident on the optical fiber again. Therefore, since the light with which the optical fiber is irradiated from the light source can be confined within the optical fiber, the end face of the optical fiber can be further illuminated.

(6) In any one of (1) to (5) above, the clamp portion may include a base on which the optical fiber is placed, and a lid that covers the optical fiber placed on the base. The base may have a first surface facing away from the light source in the direction along the central axis, and the lid may have a second surface facing away from the light source in the direction along the central axis. The fusion splicer may further include a non-transparent material that extends from the second surface toward the first surface, and that closes a gap formed between the lid and the base. In this case, by closing the gap, which is formed between the lid and the base, with the non-transparent material, the light can be prevented from leaking from the gap to the tip of the optical fiber. Therefore, the captured image of the end face of the optical fiber can be made clearer.

(7) In any one of (1) to (6) above, the fusion splicer may further include a holder base on which the optical fiber holder is mounted. The optical fiber holder may be detachable from the holder base. In this case, the fusion splicer includes the holder base, and the optical fiber holder is detachable from the holder base. Since the optical fiber holder is attachable to and detachable from the holder base, the optical fiber is easily attachable to and detachable from the rotation mechanism.

### [Details of embodiment of present disclosure]

A specific example of a fusion splicer according to an embodiment will be described. In the description of the drawings, the same or corresponding elements are denoted by the same reference signs, and duplicate descriptions will be omitted as appropriate. The drawings may be depicted in a partially simplified or exaggerated manner for ease of understanding, and dimensional ratios and the like are not limited to those shown in the drawings.

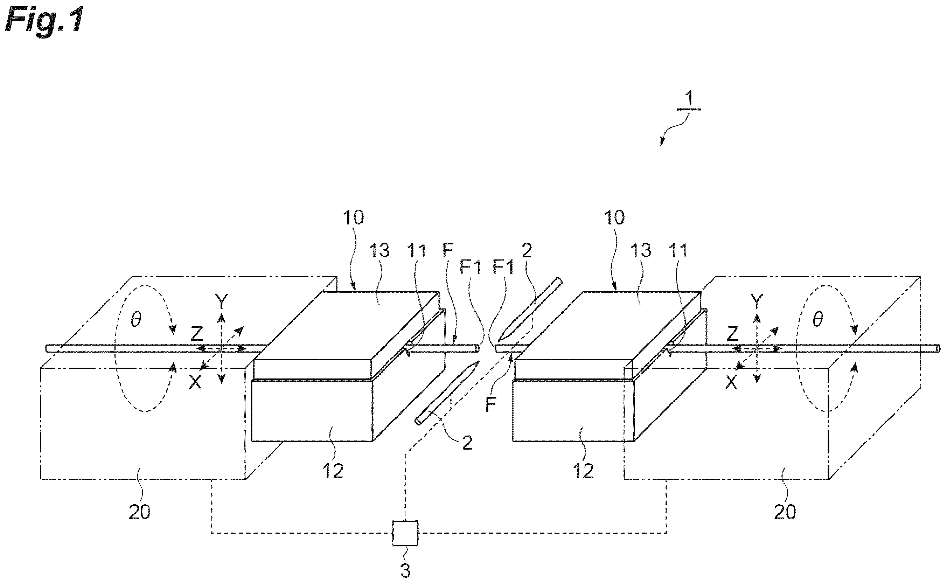

First, a configuration of the fusion splicer according to the present embodiment will be described with reference to FIG. 1. FIG. 1 is a view for describing an overview of a fusion splicer 1 according to the present embodiment. As shown in FIG. 1, the fusion splicer 1 fusion-splices a pair of optical fibers F to each other. The fusion splicer 1 includes an optical fiber holder 10 having a V-groove 11, and a rotation mechanism 20 that rotates the optical fiber holder 10. The axes of the pair of optical fibers F coincide with each other. The "axis" refers to the centerline of an optical fiber passing through the center of the optical fiber and extending along a direction in which the optical fiber extends.

The optical fiber holder 10 and the rotation mechanism 20 are aligned along an axis direction that is a direction in which the axis of the optical fiber F extends. When an XYZ three-dimensional orthogonal coordinate system is set and the axis of the optical fiber F is aligned with a Z-axis, the axis direction of the optical fiber F is a Z-axis direction. The fusion splicer 1 includes a pair of the optical fiber holders 10 aligned along the Z-axis direction that is a direction in which the pair of optical fibers F extend, and a pair of the rotation mechanisms 20 aligned along the Z-axis direction. The optical fiber F to be fusion-spliced is positioned in the V-groove 11 of each of the optical fiber holders 10. As one example, the optical fiber holder 10 is made of metal. The optical fiber holder 10 holds, for example, a coated portion of the optical fiber F. The optical fiber holder 10 holds the optical fiber F in a state where a tip F1 of the optical fiber F protrudes in the Z-axis direction. The rotation mechanism 20 is disposed on the side opposite the tip F1 of the optical fiber F with respect to the optical fiber holder 10.

A pair of discharge electrodes 2 are disposed at a position where the tips F1 of the pair of optical fibers F face each other. The pair of discharge electrodes 2 are disposed at positions facing each other along a direction intersecting the optical fibers F (for example, an X-axis direction). The optical fiber holder 10 includes, for example, a base 12 in which the V-groove 11 extending along the Z-axis direction is formed and on which the optical fiber F is placed, and a lid 13 placed on the base 12. For example, the base 12 and the lid 13 are disposed to be aligned along a Y-axis direction intersecting both the X-axis direction and the Z-axis direction.

The pair of discharge electrodes 2 fusion-splice the tips F1 of the pair of optical fibers F through electric discharge. For example, the fusion splicer 1 includes a control unit 3 that controls each part of the fusion splicer 1. The control unit 3 causes fusion-splicing under fusion conditions suited to the type of the optical fibers F to be performed by controlling the discharge current and discharge time of the discharge electrodes 2. In the fusion splicer 1, the control unit 3 causes the positions of the pair of optical fibers F to be aligned.

The control unit 3 adjusts the positions of each of the optical fibers F in the X-axis direction and the Y-axis direction, and causes the axes of the pair of optical fibers F to be aligned such that the pair of optical fibers F are aligned in a straight line along the Z-axis direction. Namely, the control unit 3 causes the pair of optical fibers F to be aligned in the X-axis direction, the Y-axis direction, and the Z-axis direction. The control unit 3 causes alignment in a direction θ to be performed by controlling the rotation mechanism 20 to rotate the optical fiber F about an axis (the same as the Z-axis in the figure) extending along the center of the optical fiber F.

The optical fibers F are, for example, optical fibers that require rotational alignment in the fusion splicer 1. The optical fibers F are optical fibers in which the positions of the cores, claddings, markers, and the like of the pair of optical fibers F need to coincide with each other in the direction θ. For example, the optical fibers F are multicore optical fibers (MCFs) or polarization maintaining fibers (PMFs).

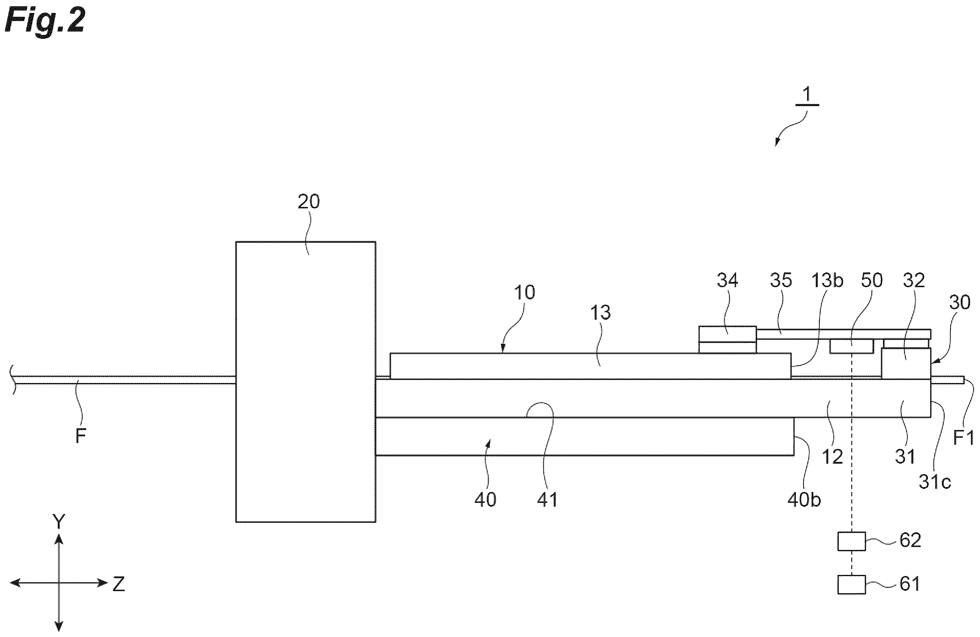

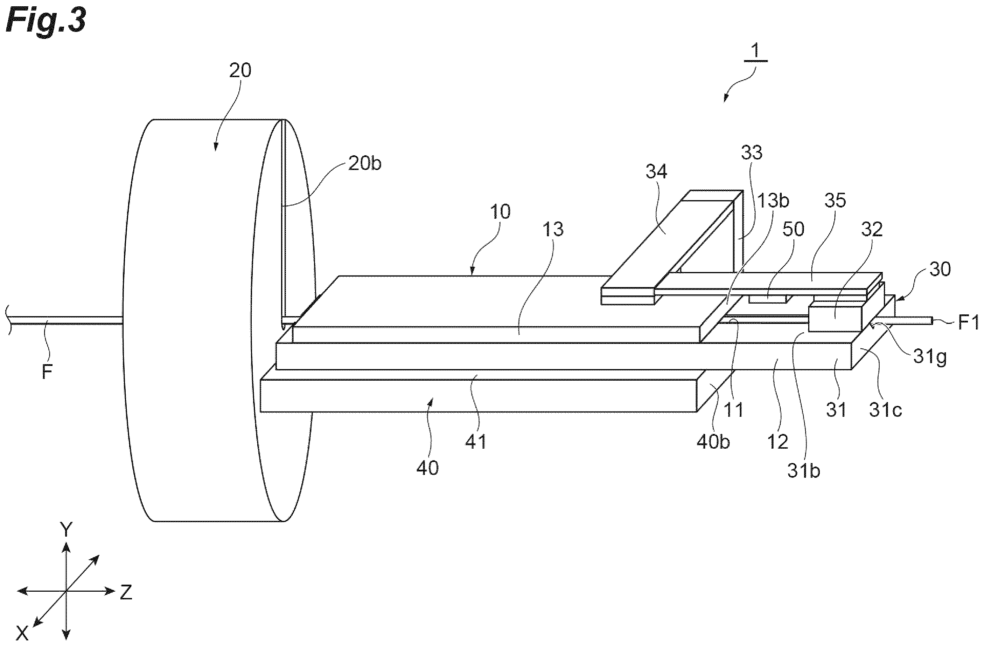

FIG. 2 is a side view showing a configuration around the optical fiber holder 10. FIG. 3 is a perspective view showing the configuration around the optical fiber holder 10. As shown in FIGS. 2 and 3, the fusion splicer 1 includes a clamp portion 30 that presses a portion of the tip F1 of the optical fiber F held by the optical fiber holder 10; a holder base 40 fixed to the rotation mechanism 20; and a light source 50. For example, the base 12 of the optical fiber holder 10 protrudes in the Z-axis direction beyond the lid 13.

A portion of the optical fiber F pressed by the clamp portion 30 is, for example, a coated portion of the optical fiber F. In this case, only a portion of the optical fiber F protruding from the clamp portion 30 is a portion from which the coating is removed. However, the portion pressed by the clamp portion 30 may be a portion of the optical fiber F from which the coating is removed (for example, a portion of the optical fiber F in which the glass is exposed). A length of the portion of the optical fiber F protruding from the clamp portion 30 is, for example, 5 mm or less.

The holder base 40 is made of, for example, metal. The holder base 40 has a mounting surface 41 on which the optical fiber holder 10 is mounted. For example, the optical fiber holder 10 is detachable from the holder base 40. In this case, the optical fiber holder 10 detached from the holder base 40 can hold the optical fiber F, and the optical fiber holder 10 that holds the optical fiber F can be mounted on the holder base 40. Furthermore, the optical fiber holder 10 can be replaced with an optical fiber holder having the V-groove 11 suitable for the diameter (coating diameter or glass diameter) of the optical fiber F.

The holder base 40 extends from the rotation mechanism 20 in the Z-axis direction. The rotation mechanism 20 is disposed on the side opposite the tip F1 (end face) with respect to the optical fiber holder 10. The rotation mechanism 20 includes, for example, a recess 20b into which the optical fiber F is inserted. The recess 20b has a slit shape recessed from an outer peripheral surface of the rotation mechanism 20 along the Y-axis direction. The rotation mechanism 20 rotates, for example, the optical fiber F about an axis extending along the center of the optical fiber F, together with the holder base 40 and the optical fiber holder 10.

The rotation mechanism 20 includes, for example, a motor (not shown) and gears (not shown). In this case, when the motor of the rotation mechanism 20 is driven, and the rotational driving force of the motor is transmitted to the holder base 40 and the optical fiber holder 10 via the gears, the holder base 40 and the optical fiber holder 10 rotate. The optical fiber F is inserted into the recess 20b of the rotation mechanism 20, and is held by the optical fiber holders 10. Therefore, as the rotation mechanism 20 rotates the holder base 40 and the optical fiber holder 10, the clamp portion 30 and the optical fiber F rotate.

The clamp portion 30 is provided to hold the optical fiber F protruding from the optical fiber holder 10. The clamp portion 30 includes, for example, a base 31 on which the optical fiber F is placed, and a lid 32 that covers the optical fiber F placed on the base 31. The clamp portion 30 holds the optical fiber F extending from the optical fiber holder 10 in the Z-axis direction by clamping the optical fiber F between the base 31 and the lid 32.

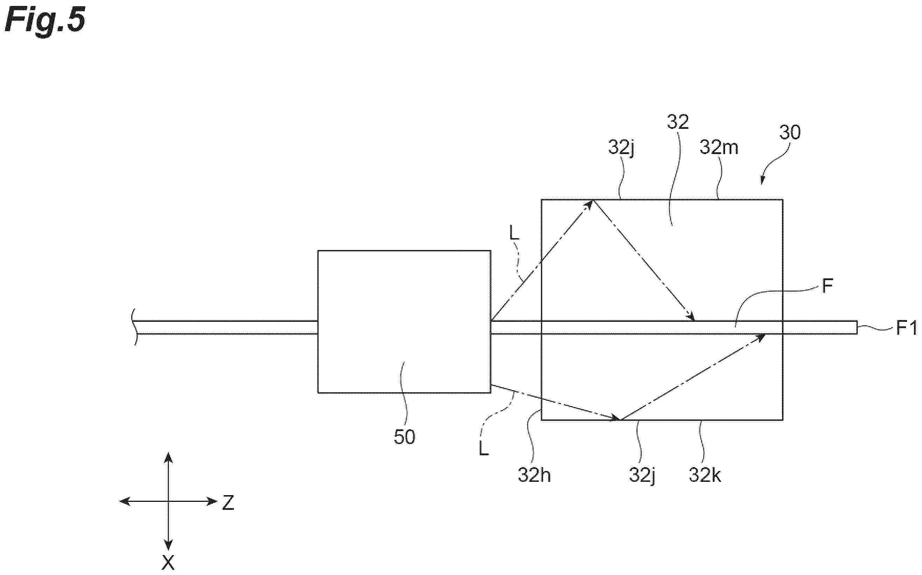

For example, the base 31 is a portion protruding from the base 12 of the optical fiber holder 10 in the Z-axis direction. An end face 31c of the base 31 located opposite the rotation mechanism 20 protrudes in the Z-axis direction beyond an end face 13b of the lid 13 located opposite the rotation mechanism 20 and an end face 40b of the holder base 40 located opposite the rotation mechanism 20. A V-groove 31g in which the optical fiber F is placed is formed in a part of an upper surface 31b of the base 31. The V-groove 31g is a groove having a V-shaped cross-section on an XY plane in FIGS. 3 and 5 and extending in the Z direction. The optical fiber F placed in the V-groove 31g is clamped between an upper surface of the V-groove 31g and a lower surface 32b of the lid 32. For example, the clamp portion 30 includes a first portion 33 protruding from the holder base 40 in the Y-axis direction; a second portion 34 extending from the first portion 33 in the X-axis direction and located above the lid 13; and a third portion 35 extending from the second portion 34 in the Z-axis direction. The lid 32 protrudes downward at an end portion of the third portion 35 located on the side opposite the second portion 34. "Downward" refers to a direction in which the clamp portion presses the optical fiber, and "upward" refers to a direction opposite "downward".

The light source 50 is disposed at a position adjacent to the base 31 and the lid 32. The light source 50 is disposed above the base 12. The light source 50 is disposed between the lid 13 of the optical fiber holder 10 and the lid 32 of the clamp portion 30. In the present embodiment, the light source 50 is fixed to a lower surface of the third portion 35.

As one example, the light source 50 is an LED light source. For example, the fusion splicer 1 includes a power source 61, and the light source 50 emits light upon receiving electric power from the power source 61 via an electric power supply portion 62. The electric power supply portion 62 refers to a unit that supplies electric power to the light source 50, and refers to, for example, a portion of the fusion splicer 1 that is electrically connected to the light source 50. For example, when the fusion splicer 1 is driven by an AC power source (when the fusion splicer 1 does not include a battery or cell), the electric power supply portion 62 may be a wiring portion of the fusion splicer 1 that is connected to a power source (as one example, a household power source or a power outlet). When the fusion splicer 1 includes a battery or cell, the electric power supply portion 62 may be an internal wiring portion of the fusion splicer 1 that is connected to the battery or cell. The fusion splicer 1 may include a dedicated battery or cell to which the electric power supply portion 62 that supplies electric power to the light source 50 is connected.

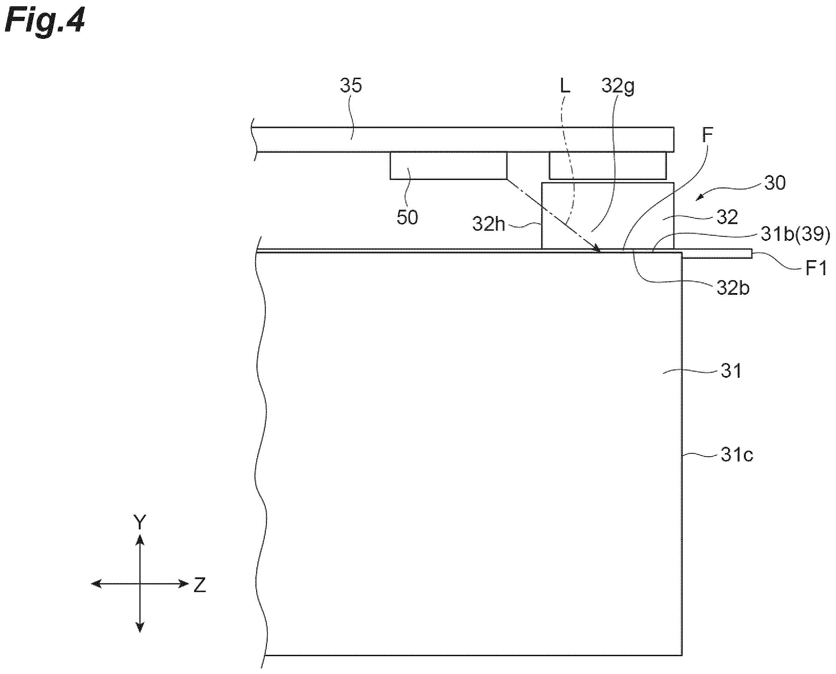

FIG. 4 is an enlarged side view of the clamp portion 30 and the light source 50. As shown in FIG. 4, the light source 50 causes light L to be incident on the optical fiber F from the side via the clamp portion 30. For example, the light source 50 irradiates the clamp portion 30 with the light L in an obliquely downward direction. The clamp portion 30 includes a transparent portion 32g that is transparent to the light L. The transparent portion 32g is formed, for example, in the lid 32. The transparent portion 32g is formed in at least a part of the lid 32. The transparent portion 32g may be formed in the entirety of the lid 32, or may be formed in a part of the lid 32. Namely, the entirety of the lid 32 may be the transparent portion 32g, or a part of the lid 32 may be the transparent portion 32g.

FIG. 5 is a plan view schematically showing the clamp portion 30 and the light source 50. As shown in FIGS. 4 and 5, the clamp portion 30 includes a non-transparent portion 32j at least in a part other than a surface 32h through which the light L enters the clamp portion 30 and the lower surface 32b facing the optical fiber F. For example, in the lid 32, the non-transparent portions 32j are disposed on a first side surface 32k facing the X-axis direction and extending in both the Y-axis direction and the Z-axis direction, and on a second side surface 32m facing away from the first side surface 32k. The non-transparent portions 32j are, for example, reflective materials that reflect the light L from the light source 50. In this case, at least a portion of the light L reflected by the non-transparent portions 32j is incident on the optical fiber F.

The base 31 has the upper surface 31b facing the optical fiber F. The optical fiber F is clamped between the upper surface 31b of the base 31 and the lower surface 32b of the lid 32. Alternatively, the optical fiber F is clamped between the V-groove 31g formed on the upper surface of the base 31 and the lower surface 32b of the lid 32. At least a part of the upper surface 31b of the base 31 facing the optical fiber F may be a highly reflective surface 39. The highly reflective surface is a surface that is processed to increase the reflectance of incident light, or a surface to which a film or the like is affixed. For example, the highly reflective surface is a surface that is mirror-finished by polishing. In addition, the highly reflective surface may be a surface to which a reflective material is affixed.

For example, the highly reflective surface 39 is a polished surface. The polished surface is a surface subjected to polishing. For example, the highly reflective surface 39 is a surface that is polished with an abrasive material. In the example of FIG. 4, the upper surface 31b of the base 31 including the V-groove 31g may be the highly reflective surface 39. In this case, the light L incident on the lid 32 propagates through the inside of the optical fiber F while being reflected by the upper surface 31b of the base 31 including the V-groove 31g. Therefore, the light L can more reliably reach the tip F1 (end face) of the optical fiber F.

An example in which the upper surface 31b of the base 31 including the V-groove 31g is the highly reflective surface 39 has been described above. However, a part of the V-groove 31g may be the highly reflective surface 39.

Next, operational effects obtained from the fusion splicer 1 according to the present embodiment will be described. In the fusion splicer 1, the optical fiber holder 10 holds the optical fiber F, and the rotation mechanism 20 rotates the optical fiber holder 10. The fusion splicer 1 includes the clamp portion 30 that presses the optical fiber F, and the clamp portion 30 is disposed on the side opposite the rotation mechanism 20 with respect to the optical fiber holder 10. Furthermore, the fusion splicer 1 includes the light source 50 that irradiates the clamp portion 30 with the light L. The tip F1 of the optical fiber F protrudes from the clamp portion 30. The clamp portion 30 includes the transparent portion 32g that is transparent to the light L from the light source 50, and that transmits the light L to the optical fiber F. The light that has transmitted through the transparent portion 32g of the clamp portion 30 is incident on the optical fiber F, and propagates to the tip F1 of the optical fiber F. Therefore, the end face of the optical fiber F located at the tip F1 of the optical fiber F can be sufficiently illuminated.

As described above, the clamp portion 30 may include the non-transparent portion 32j at least in a part other than the surface 32h through which the light L from the light source 50 enters and the lower surface 32b facing the optical fiber F. In this case, the light L can be prevented from leaking from the non-transparent portion 32j provided at least in a part other than the surface 32h through which the light L from the light source 50 enters and the lower surface 32b facing the optical fiber F. Therefore, stray light generated in the transparent portion 32g can be prevented from exiting the clamp portion 30.

As described above, the non-transparent portions 32j may be a reflective material that reflects the light L. In this case, since the light L reflected by the reflective material can be incident on the optical fiber F, the end face of the optical fiber F can be made brighter.

As described above, at least a part of the surface of the clamp portion 30 facing the optical fiber F may be the highly reflective surface 39. In this case, the light that has reached the optical fiber F from the light source 50 via the clamp portion 30 is reflected by the highly reflective surface 39, and is incident on the optical fiber F again. Therefore, since the light L with which the optical fiber F is irradiated from the light source 50 can be confined within the optical fiber F, the end face of the optical fiber F can be further illuminated.

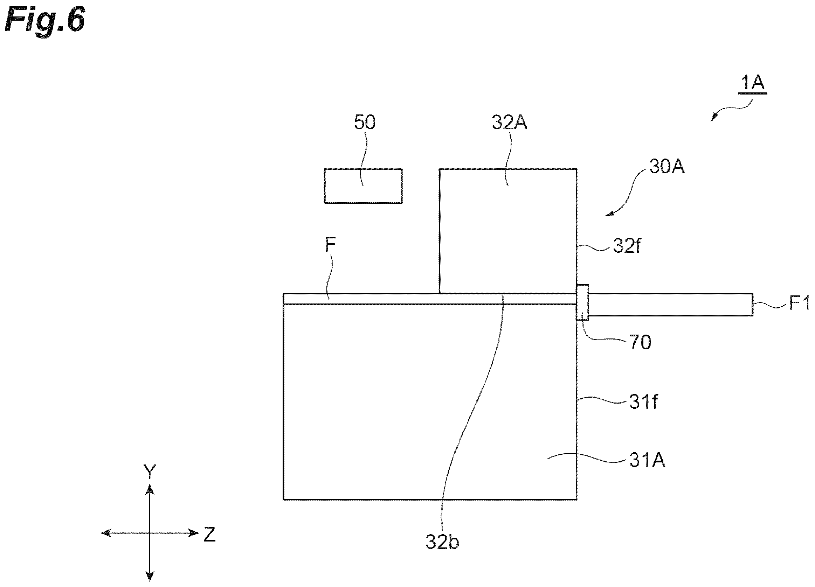

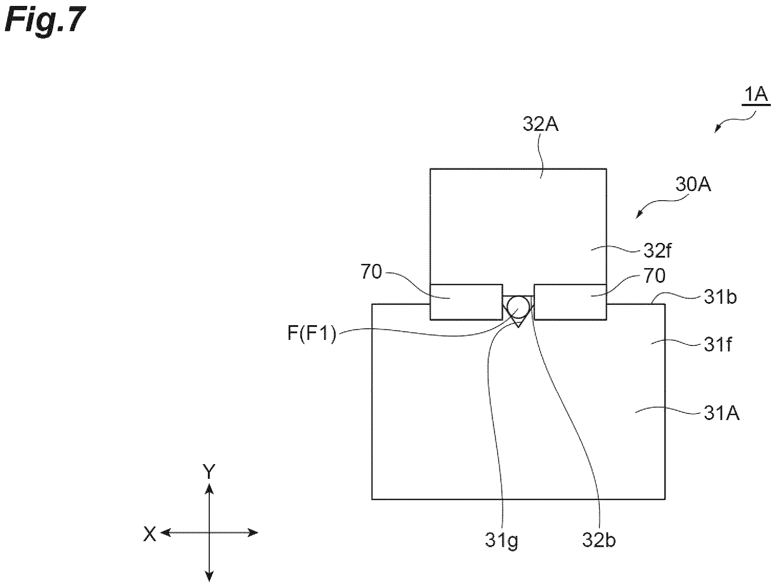

Subsequently, various modification examples of the fusion splicer according to the present disclosure will be described. Some of the configurations of fusion splicers according to the modification examples to be described later are the same as some of the configurations of the fusion splicer 1 described above. Therefore, in the following description, the same descriptions as the descriptions already given will be omitted as appropriate with the same components denoted by the same reference signs. FIG. 6 is a side view showing a clamp portion 30A of a fusion splicer 1A according to a first modification example. FIG. 7 is a front view showing the clamp portion 30A. The clamp portion 30A includes a base 31A and a lid 32A. The base 31A has a first surface 31f having an axis extending along the optical fiber F as a central axis, and facing away from the light source 50 in a direction along the central axis. The lid 32A has a second surface 32f facing away from the light source 50 in the direction along the central axis. The fusion splicer 1A includes a non-transparent material 70 that closes a gap formed between the lid 32A and the base 31A.

The non-transparent material 70 closes a portion of the gap formed between the lid 32A and the base 31A except for the location where the optical fiber F protrudes. The non-transparent material 70 is fixed to the second surface 32f of the lid 32A. The non-transparent material 70 extends from the second surface 32f toward the first surface 31f of the base 31A. As described above, by closing the gap, which is formed between the lid 32A and the base 31A, with the non-transparent material 70, the light can be prevented from leaking from the gap in the direction of the tip F1 of the optical fiber F. Therefore, the captured image of the end face of the tip F1 of the optical fiber F can be made clearer.

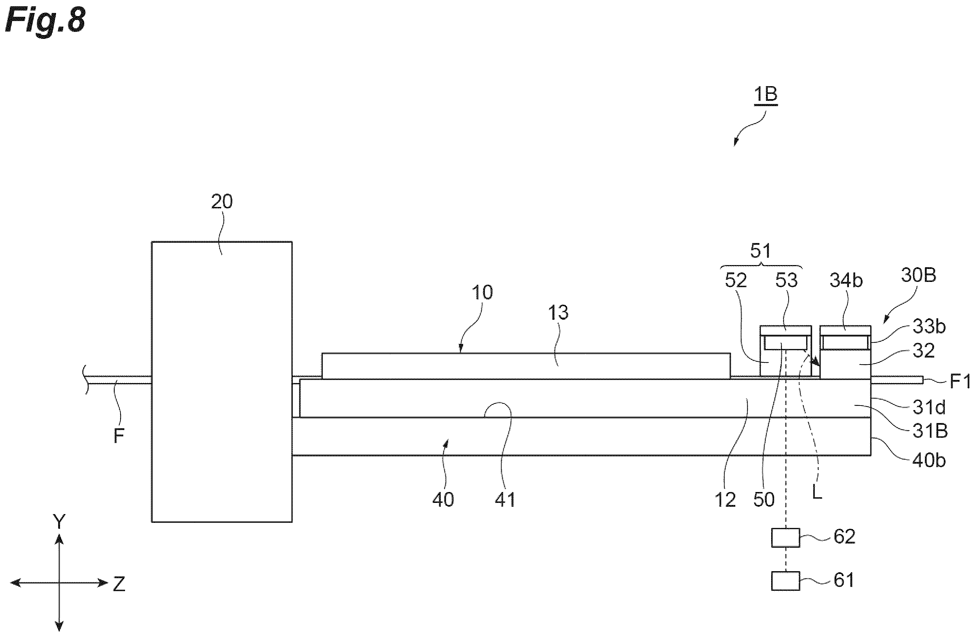

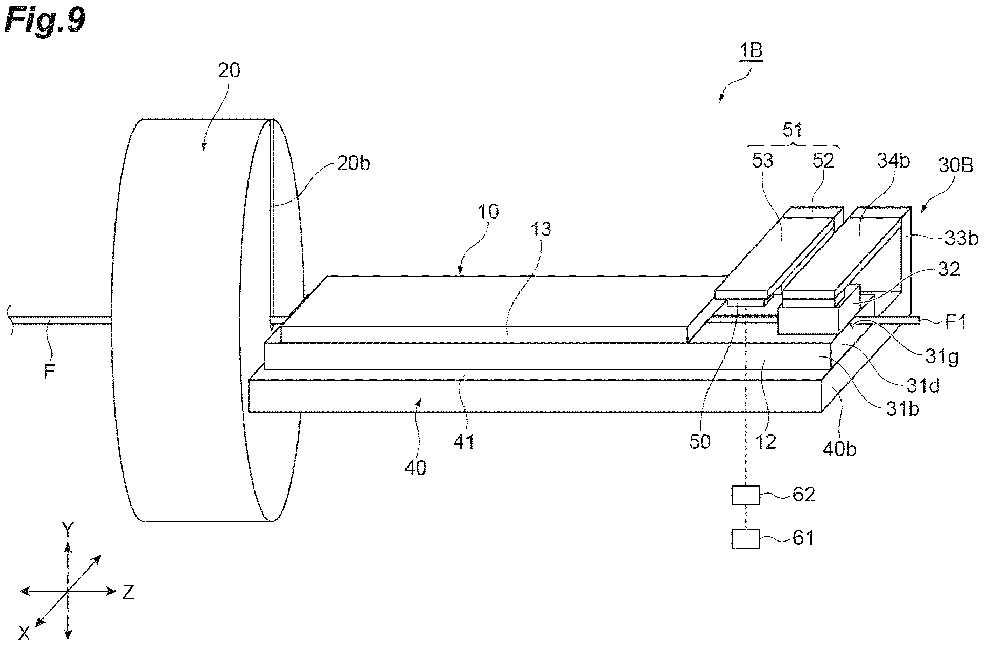

FIG. 8 is a side view of a fusion splicer 1B according to a first modification example. FIG. 9 is a perspective view of the fusion splicer 1B. As shown in FIGS. 8 and 9, the fusion splicer 1B includes a clamp portion 30B and a configuration around the light source 50 that are different from those of the fusion splicer 1 described above. The clamp portion 30B includes a base 31B and the lid 32. The base 31B has an end face 31d having an axis extending along the optical fiber F as a central axis, and located opposite the rotation mechanism 20 in a direction along the central axis. The end face 31d is a surface that is flush with the end face 40b of the holder base 40 with no step therebetween, the end face 40b being located opposite the rotation mechanism 20. The clamp portion 30B includes a first portion 33b protruding from the holder base 40 in the Y-axis direction, and a second portion 34b extending from the first portion 33 in the X-axis direction and located above the base 31B. The lid 32 protrudes downward at the second portion 34b.

The light source 50 is held by a light source holding mechanism 51. The light source holding mechanism 51 includes a third portion 52 protruding from the holder base 40 in the Y-axis direction, and a fourth portion 53 extending from the third portion 52 in the X-axis direction and located above the base 12. The light source 50 is fixed to a lower surface of the fourth portion 53. Similarly to the embodiment described above, the light source 50 irradiates the clamp portion 30B with the light L. The light L transmits through the lid 32, and is incident on the optical fiber F.

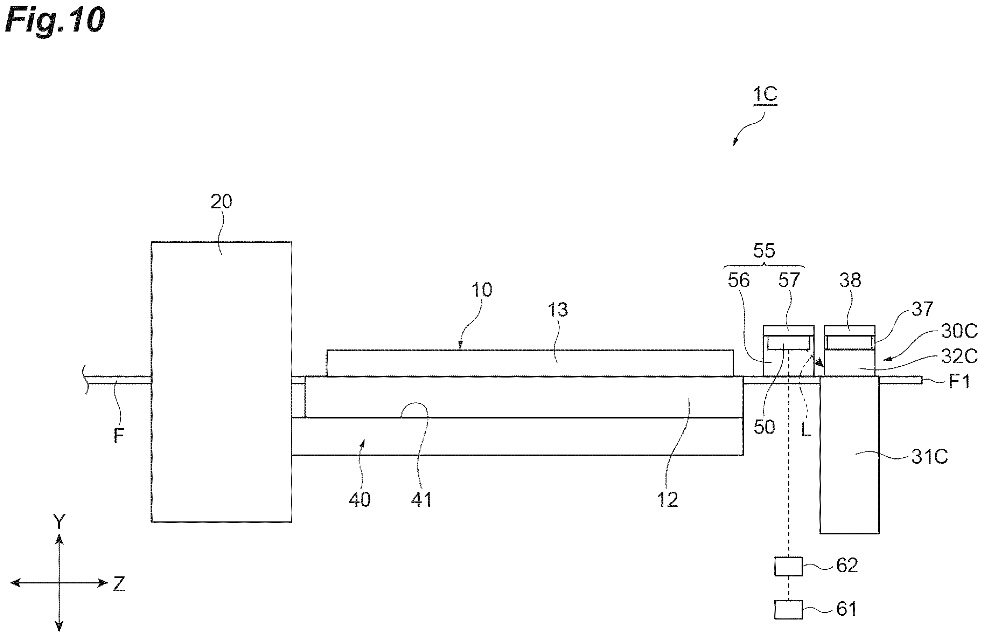

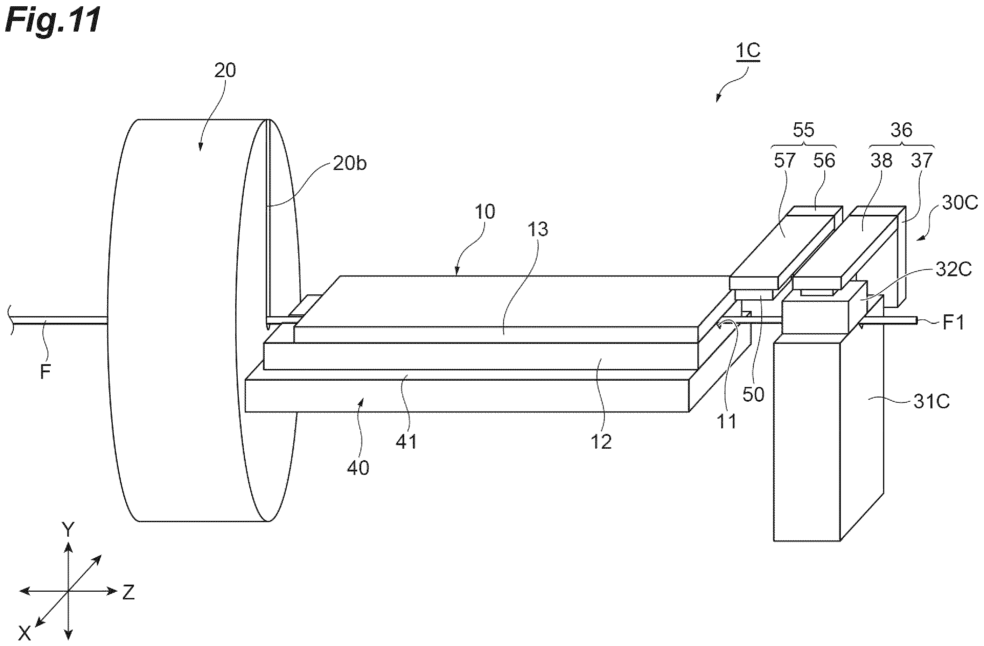

FIG. 10 is a side view of a fusion splicer 1C according to a third modification example. FIG. 11 is a perspective view of the fusion splicer 1C. As shown in FIGS. 10 and 11, the fusion splicer 1C differs from the fusion splicer 1 described above in that the fusion splicer 1C includes a clamp portion 30C different from the clamp portion 30 and in that the light source 50 does rotate together with the optical fiber holder 10.

The clamp portion 30C includes a base 31C that is separate from the holder base 40, and a lid 32C that covers the optical fiber F placed on the base 31C. The lid 32C is held by a lid holding mechanism 36. The lid holding mechanism 36 includes a first portion 37 protruding in the Y-axis direction with respect to the base 31C, and a second portion 38 extending from the first portion 37 in the X-axis direction. The lid 32C is held on a lower surface of the second portion 38.

The light source 50 is held by a light source holding mechanism 55 disposed at a position adjacent to the lid holding mechanism 36. The light source 50 and the light source holding mechanism 55 are disposed between the optical fiber holder 10 and the clamp portion 30C. The light source holding mechanism 55 includes a third portion 56 extending parallel to the first portion 37, and a fourth portion 57 extending from the third portion 56 in the X-axis direction. The light source 50 is held on a lower surface of the fourth portion 57. The fusion splicer 1C includes the light source 50 that is disposed between the optical fiber holder 10 and the clamp portion 30C, and that causes the light L to be incident on the clamp portion 30C. The same effects as those of the fusion splicer 1 described above can be obtained from the fusion splicer 1C.

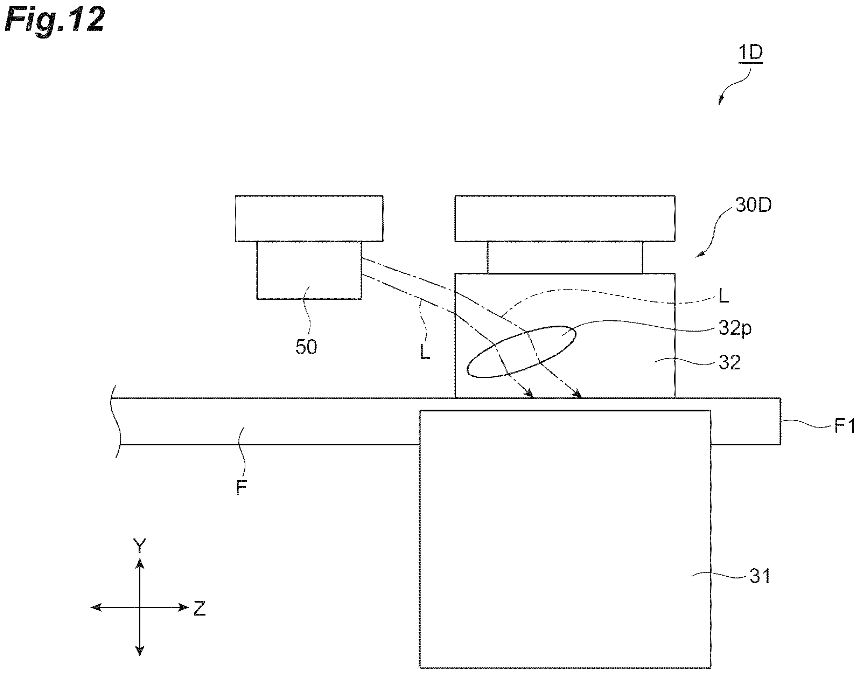

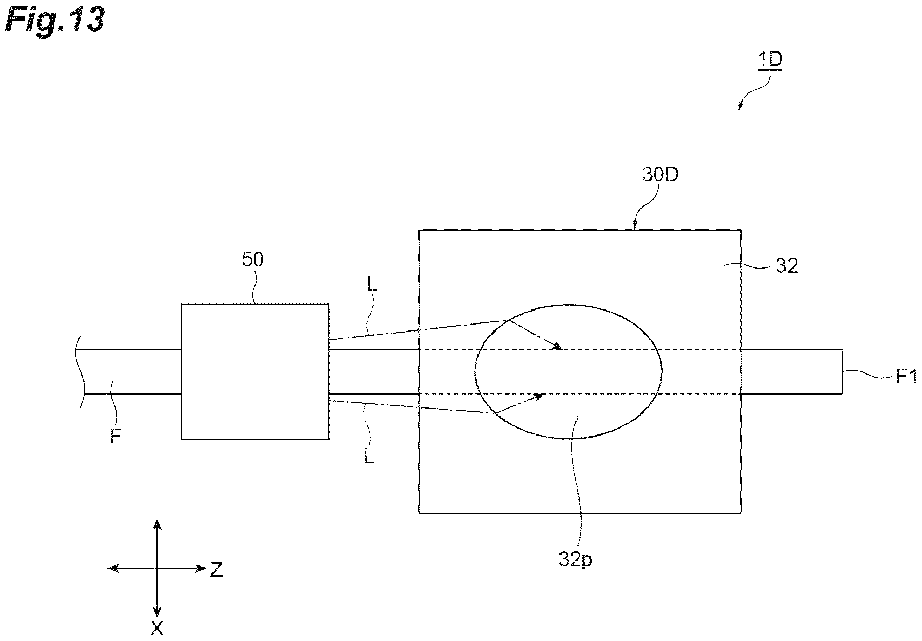

FIG. 12 is a side view of a fusion splicer 1D according to a fourth modification example. FIG. 13 is a plan view of the fusion splicer 1D. As shown in FIGS. 12 and 13, a clamp portion 30D of the fusion splicer 1D includes an optical path change portion 32p that changes the optical path of the light L inside the clamp portion 30D. The optical path change portion 32p is disposed inside the lid 32.

The optical path change portion 32p is, for example, a lens. In this case, the light L from the light source 50 can be condensed at the optical path change portion 32p and guided to the optical fiber F. In addition, the optical path change portion 32p may be an optical waveguide that guides the light L to the optical fiber F. As described above, by changing the optical path of the light L from the light source 50 inside the clamp portion 30D using the optical path change portion 32p, a larger amount of the light L can be guided to a portion of the optical fiber F held by the clamp portion 30D. Therefore, the end face of the optical fiber F can be made brighter.

The fusion splicers according to the embodiment and various modification examples have been described above. However, the present invention is not limited to the embodiment or the modification examples described above. Namely, those skilled in the art easily recognize that various modifications and changes can be made to the present invention within the scope of the concept described in the claims. The configuration of each part of the fusion splicer can be changed as appropriate within the scope of the concept. Namely, the shape, size, number, material, and disposition mode of each part of the fusion splicer according to the present disclosure are not limited to the embodiment or the modification examples described above, and can be changed as appropriate. In addition, the fusion splicer according to the present disclosure may be a combination of a plurality of the embodiment, the first modification example, the second modification example, the third modification example, and the fourth modification example described above.

For example, in the embodiment described above, an example in which at least a part of the surface of the clamp portion 30 facing the optical fiber F is the highly reflective surface 39 has been described. However, the highly reflective surface 39 may be omitted. In the embodiment described above, an example in which the optical fiber holder 10 is attachable to and detachable from the holder base 40 has been described. However, the optical fiber holder may not be attachable to and detachable from the holder base. In addition, the fusion splicer may not include the holder base 40. In this case, the fusion splicer may be configured such that the optical fiber holder 10 is fixed to the rotation mechanism 20.

### Reference Signs List

1, 1A, 1B, 1C, 1D: fusion splicer, 2: discharge electrode, 3: control unit, 10: optical fiber holder, 11: V-groove, 12: base, 13: lid, 13b: end face, 20: rotation mechanism, 20b: recess, 30, 30A, 30B, 30C, 30D: clamp portion, 31, 31A, 31B, 31C: base, 31b: upper surface, 31c: end face, 31d: end face, 31f: first surface, 31g: V-groove, 32, 32A, 32C: lid, 32b: lower surface, 32f: second surface, 32g: transparent portion, 32h: surface, 32j: non-transparent portion, 32k: first side surface, 32m: second side surface, 32p: optical path change portion, 33, 33b: first portion, 34, 34b: second portion, 35: third portion, 36: lid holding mechanism, 37: first portion, 38: second portion, 39: highly reflective surface, 40: holder base, 40b: end face, 41: mounting surface, 50: light source, 51: light source holding mechanism, 52: third portion, 53: fourth portion, 55: light source holding mechanism, 56: third portion, 57: fourth portion, 61: power source, 62: electric power supply portion, 70: non-transparent material, F: optical fiber, F1: tip, L: light.

## Claims

1. A fusion splicer, comprising:
an optical fiber holder that holds an optical fiber;
a rotation mechanism that rotates the optical fiber holder about a central axis extending along the optical fiber;
a clamp portion that is disposed on a side opposite the rotation mechanism with respect to the optical fiber holder in a direction along the central axis, and that presses the optical fiber held by the optical fiber holder;
a light source that irradiates the clamp portion with light; and
an electric power supply portion that supplies electric power to the light source,
wherein a tip of the optical fiber protrudes from the clamp portion, and
the clamp portion includes a transparent portion that is transparent to the light, and that transmits the light to the optical fiber.

2. The fusion splicer according to claim 1,
wherein the clamp portion includes a non-transparent portion at least in a part other than a surface through which the light from the light source enters and a surface facing the optical fiber.

3. The fusion splicer according to claim 2,
wherein the non-transparent portion is a reflective material that reflects the light.

4. The fusion splicer according to any one of claims 1 to 3,
wherein the clamp portion includes an optical path change portion that changes an optical path of the light inside the clamp portion.

5. The fusion splicer according to any one of claims 1 to 3,
wherein at least a part of a surface of the clamp portion facing the optical fiber is a highly reflective surface.

6. The fusion splicer according to any one of claims 1 to 3,
wherein the clamp portion includes a base on which the optical fiber is placed, and a lid that covers the optical fiber placed on the base,
the base has a first surface facing away from the light source in the direction along the central axis,
the lid has a second surface facing away from the light source in the direction along the central axis, and
the fusion splicer further includes a non-transparent material that extends from the second surface toward the first surface, and that closes a gap formed between the lid and the base.

7. The fusion splicer according to any one of claims 1 to 3, further comprising:
a holder base on which the optical fiber holder is mounted,
wherein the optical fiber holder is detachable from the holder base.
